# EUROPEAN PATENT APPLICATION

(11) **EP 1 719 973 A1**
(43) Date of publication of application: **08.11.2006**
(21) Application number: 05710727.8
(22) Date of filing: 25.02.2005
(51) Int. Cl.: G01B 11/24, G01N 21/27

(54) **THREE-DIMENSIONAL SHAPE MEASURING AND ANALYZING DEVICE**

(30) Priority: 27.02.2004 JP 2004052910
(71) Applicant: Techno Network Shikoku Co., Ltd., Takamatsu-shi, Kagawa 760-0033 (JP); FUTEC INCORPORATED, Takamatsu-shi Kagawa 7610301 (JP)
(72) Inventor: ISHIMARU, Ichirou, c/o Kagawa University, Takamatsu-shi, Kagawa 7610396 (JP); HYODO, Ryoji, c/o Kagawa University, Takamatsu-shi, Kagawa 7610396 (JP)
(74) Representative: Hoeger, Stellrecht & Partner Patentanwälte
(86) International application number: PCT/JP2005/003177
(87) International publication number: WO 2005/083353

(57) **Abstract**

The present invention intends to provide a measurement system capable of measuring a three-dimensional geometry of a target object over a relatively large area, in a small length of time and by a contact-free method. When a ray of light is cast from a light source onto the target object **s** and reflected at a certain point on the surface of the target object **s**, the light produces direct reflection light (zero-order light) and higher-order diffraction light. The zero-order light is guided by a separating optics to a movable reflector of a variable-phase filter 20 while the higher-order diffraction light is guided to a fixed reflector. The two rays of light are reflected by the corresponding reflectors and led to substantially the same point by an interference optics system. At this point, the two rays of light interfere with each other. Under such a condition, when the movable reflector of the variable-phase filter 20 is moved, the strength of the interference light at the imaging point of the interference optics system gradually changes. The position of the movable reflector at the peak point of the interference light depends on the distance between the starting point on the target object **s** and the movable reflector. Therefore, the position of the starting point can be calculated from the position of the movable reflector at the peak point. By performing such a measurement and calculation process on each point of the image of the target object, one can determine the three-dimensional geometry of the object. Moreover, each point can be analyzed by Fourier-transforming the interferogram of that point into a spectrum.

## Description

### TECHNICAL FIELD

The present invention relates to a technique for analyzing and measuring the three-dimensional geometry of a target object, which uses an optical probe to quickly and easily measure the three-dimensional geometry of objects having various sizes from nanometers to micrometers, and which is capable of performing an analysis of an object.

### BACKGROUND ART

Development of the next generation semiconductor devices is a critical national project for the Japanese semiconductor industry in order to compete with those of the United States and other countries and provide basic support for further developments of the information technology (IT) industry. Success in the development of the next generation semiconductor devices hinges on the establishment of techniques for manufacturing and checking hyperfine structures of nanometers or smaller (0.1 µm or smaller in wire width).

Also, the recent increase in the number of transistors per chip requires a multilayer interconnection technique for creating a three-dimensional wiring structure. Therefore, it is necessary to establish a method for measuring three-dimensional structures of nanometer sizes.

A specific example follows: In recent years, the circuit patterns of semiconductor devices have been composed of finer wires arranged on multiple layers to increase the number of transistors per chip. To produce such a structure, the steps of the patterns on a wafer must be lowered by chemical mechanical polishing (CMP) or a similar planarizing technique. To appropriately set process conditions for CMP, it is necessary to perform preliminary measurements to collect information about how much the step will be removed on what conditions, and change the polishing agent, polishing time or other parameters according to the collected information. Furthermore, day-to-day monitoring of the state of the steps removal is required to promptly detect any problem or trouble and take measures as soon as possible. These tasks require a simple and quick method for measuring the height of the steps of nanometer sizes.

Conventional methods for evaluating fine structures of nanometer sizes can be classified into the following two types:
1) Mechanical probing
   A type of scanning method that uses a mechanical probe, a representative example of which is an atomic force microscope (AFM). A mechanical probe can precisely measure three-dimensional geometries. However, its scanning range (i.e. measurement range) is small because it mechanically produces a two-dimensional scanning motion of the probe (or a relative motion between the probe and the target object). Another drawback is that the mechanical scanning is too slow to quickly perform a measurement.
2) Optical probing
   A type of scanning method that uses the interference of light, a representative example of which is a differential interferometer. Optical probing is featured by its speed in measurement. However, it cannot discriminate a projection from a recess and also has difficulty in precisely measuring the height of the projection or the depth of the recess.

In view of the above problems, the present inventor has proposed a three-dimensional geometric measurement system, which uses a phase difference between two light paths (Patent Document 1).
This three-dimensional geometric measurement system determines the geometry of an object by the following method: First, a variable-phase filter having a fixed reflector and a movable reflector is set in the middle of the optical path, where the movable reflector can change its position along the optical axis. Next, a ray of light is cast from a light source onto the object. In being reflected at a certain point (called the "starting point" hereinafter) on the surface of the target object, the light produces direct reflection light (zero-order light) and higher-order diffraction light. A separating optics is provided in the optical path to separate the two kinds of light. It guides the zero-order light to the movable reflector (or the fixed reflector) of the variable-phase filter while guiding the higher-order diffraction light to the fixed reflector (or the movable reflector). Both zero-order light and higher-order diffraction light are reflected by the corresponding reflectors and led to substantially the same point by an interference optics system. At this point, the two rays of light interfere with each other to produce an image of the starting point of the target object.

Then, the movable reflector of the variable-phase filter is moved within the range of the wavelengths of the light used. During this operation, the phase of the zero-order light (or the higher-order diffraction light) reflected by the movable reflector gradually changes from that of the higher-order diffraction light (or the zero-order light) reflected by the fixed reflector. This phase change also causes a gradual change in the strength of the interference light produced by the two rays of light at the imaging point of the interference optics system. The position of the movable reflector of the variable-phase filter at which the strength of the interference light takes the maximum value (or minimum value, or any other characteristic value) depends on the position of the starting point on the target object (more exactly, the distance between the starting point and the movable reflector). Therefore, the position of the starting point can be calculated from the position of the movable reflector that corresponds to the maximum value (or any other characteristic value) of the strength. By performing such measurement and calculation process on each point of the image of the target object, one can determine the three-dimensional geometry of the object.
[Patent Document 1] Japanese Unexamined Patent Publication No. 2002-243420

### DISCLOSURE OF THE INVENTION

### PROBLEM TO BE SOLVED BY THE INVENTION

The above-described three-dimensional geometric measurement system uses coherent light. This light is split into two optical paths and then combined again to produce interference light, whose strength changes depending on the phase difference between the two rays of light, and this change in the strength is measured to determine the height of the sample. According to this method, the phase difference becomes zero if the optical path difference between the two optical paths equals one wavelength. Thus, in principle, the system has a restriction that it cannot measure a height difference equal to or larger than one wavelength.

The above-described three-dimensional geometric measurement system has been developed mainly for the manufacturing and checking process in the semiconductor development, and the aforementioned restriction is inconsequential as long as the system is used for such purposes.

In recent years, the biotechnology industry is making significant progress, catching up with the nanotechnology in which the semiconductor industry is included. These two fields of industries are fusing into a new industry called the "nanobionic industry." In this industrial field, technologies intended for medical applications are playing a leading role.
The most important subjects in medical fields include studies on the functions of organs within a cell as well as research at a level of genes or molecules. For example, observation performed at the cell level is indispensable for early detection of cancers.
Normally, a cell has a size of micrometers, and this minute size makes it difficult for the above-described system to measure the surface properties or internal structure of the cell.
Accordingly, the present invention intends to improve the above-described conventional three-dimensional geometric measurement system so that it can measure an object whose three-dimensional geometry is larger than the wavelength of the light used and analyze the composition of the object.

### MEANS FOR SOLVING THE PROBLEMS

To solve the above-described problem, the present invention provides a system for geometric measurement and analysis of a three-dimensional object, which is characterized in that it includes:
a) a variable-phase filter having a fixed reflector and a movable reflector whose position can be changed along an optical axis;
b) a separating optics for guiding zero-order light to the movable reflector or the fixed reflector and higher-order diffraction light to the fixed reflector or the movable reflector, where the two kinds of light come from each point of a target object irradiated with low-coherent white light;
c) an interference optics system for guiding the reflected zero-order light and the reflected higher-order diffraction light to substantially the same point;
d) a photo-receiver for measuring the strength of the interference light; and
e) a position-determining and analyzing unit for determining the position of each point of the target object in the direction of the optical axis and/or for determining the composition of each point of the target object, on the basis of the change in the strength of the interference light measured by the photo-receiver, while moving the movable reflector along the optical axis.

Having the above-described construction, the system for geometric measurement and analysis of a three-dimensional object measures the three-dimensional geometry of an object and analyzes its composition on the basis of the following principle: First, the target object is irradiated with low-coherent white light. The "white light" does not need to be strictly white; a ray of heterochromatic light (or multiple-wavelength light) can be used instead. Not only visible light but also ultraviolet or infrared light may be used as long as optical elements for such light are available. The light may be produced by a light source (e.g. a light bulb) installed inside the system or it may be an external light (e.g. sunlight).

In being reflected at a certain point (called the "starting point" hereinafter) on the surface of the target object, the light produces direct reflection light (zero-order light) and higher-order diffraction light. The zero-order light is guided by the separating optics to the movable reflector (or the fixed reflector) of the variable-phase filter and the higher-order diffraction light is guided to the fixed reflector (or the movable reflector). Both zero-order light and higher-order diffraction light are reflected by the corresponding reflectors and led to approximately the same point by the interference optics system. At this point, the two rays of light interfere with each other to produce an image of the starting point of the target object.

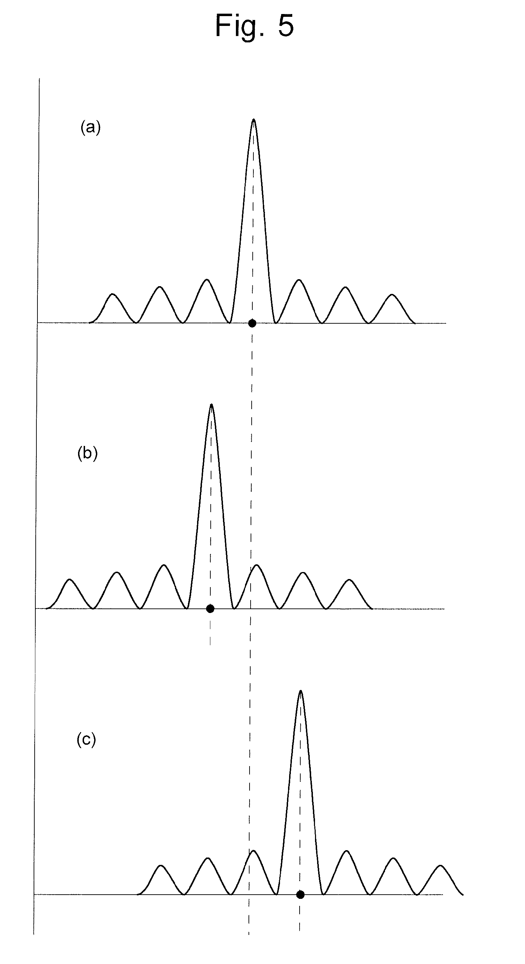

In contrast to the aforementioned conventional three-dimensional geometric measurement system, the system according to the present invention uses low coherent white light. Therefore, the two rays of light coming from the two optical paths will be in phase and strengthen the interference light at the imaging point to produce a strong peak only when the two optical paths have the same length. If the two paths are not identical in length, the two rays of light will inevitably be out of phase, so that the aforementioned strong peak never takes place. When the movable reflector of the variable-phase filter is gradually moved from an initial position, the strength of the interference light observed at the imaging point will change as shown by the interferogram of Fig. 5(a), in which the strength sharply peaks only at one point while taking smaller values at other points. The position of the movable reflector at which the peak of the interferogram is observed corresponds to the position of the target point of the object in the direction of the optical axis (more exactly, the distance between the starting point and the movable reflector). Therefore, one can determine the three-dimensional geometry of the target object by detecting the peak of the interferogram and locating the position of the movable reflector at the peak position for each point within the image of the target object.

### EFFECT OF THE INVENTION

The system for geometric measurement of a three-dimensional object according to the present invention does not use a mechanical probe. Instead, it captures an optical image of the entire object at one time and measures the strength of each point of the image to determine the three-dimensional geometry of the object, as in the case of the conventional geometric measurement system described previously This method enables the measurement of a three-dimensional geometry over a large area and makes the measurement time much shorter than in the case where the object is mechanically scanned. Furthermore, the contact-free measurement method allows even a very soft object to be measured and provides highly objective, well-reproducible measurement results irrespective of the hardness (rigidity) of the target object. Moreover, the present system can measure even a three-dimensional geometry whose size is equal to or larger (higher) than the wavelength of the measurement light. Such a measurement is not performable with the aforementioned conventional system or similar systems that measure a three-dimensional geometry on the basis of the interference strength of monochromatic light.

To produce white-light interference with a two-beam interferometer (as typified by Michelson's interferometer), it is necessary to tune the optical paths of the reference light and the object light so that their absolute optical path length becomes smaller than the coherence length. This work includes a fine-tuning process and practically consumes a considerable length of time. In contrast, the present invention uses a shared optical path. According to this design, the reference level that produces the zero-order light corresponds to the level that cancels the absolute optical path difference, and this level serves as the reference for measuring the height difference. Thus, the present design is advantageous in that it does not need the above-described troublesome tuning work.

Moreover, since the measurement light used in the present invention is white light, the light will be absorbed at any point on (or in) the target object at one or more wavelengths specific to the substance present at the point. Therefore, one can analyze the target object by Fourier-transforming an interferogram into a spectrum and detecting the absorption wavelengths in the spectrum.

The measuring and analyzing system according to the present invention can be combined with a rotation control mechanism, a fundamental technical element used in the single cell spectral tomography, to create a high-precision three-dimensional cell tomography. This combination enables detailed monitoring of the temporal change in the distribution of components inside a cell while keeping the cell alive. Such a system will support a reliable diagnosis of the early stages of cancer. Furthermore, combining the system with a DNA analysis technique will provide a living body observation system capable of a comprehensive diagnosis, including the detection of DNA variations and the determination of individual differences of cell metabolic functions. For example, this system can be used to provide a customized therapy in which a special treatment plan is prepared for each person in view of the metabolic functions inside the cells of that person.

The above-described analyzing function also helps the checking of semiconductor manufacturing equipment. That is, the system according to the present invention can be used to preliminarily analyze the surface of a substrate in advance of a laser abrasion process for removing impurities from the surface of the substrate by a laser beam. The analysis enables the laser beam to be strengthened at the points where impurities are present or weakened at other points. It also allows the strength of the laser beam to be regulated according to the compositions of the impurities. Thus, the present system can effectively remove the impurities without damaging the substrate.

### BRIEF DESCRIPTION OF THE DRAWINGS

Fig. 1 is a diagram showing the construction of a reflection type three-dimensional geometric measurement system as the first embodiment of the present invention.
Fig. 2 is a perspective view of an attenuation filter and a variable-phase filter used in the first embodiment.
Fig. 3 is a schematic view of an example of the geometry of the surface of a phase object (target object).
Fig. 4 is a schematic view showing the reflection of zero-order light and higher-order diffraction light at the variable-phase filter.
Fig. 5 is a waveform diagram of an interferogram resulting from interference between the zero-order light and the higher-order diffraction light.
Fig. 6 is a waveform diagram of an interferogram and a spectrum produced by Fourier-transforming the interferogram.
Fig. 7 is a perspective view of another example of the forms of the illumination slit, the attenuation filter and the variable-phase filter.
Fig. 8 is a perspective view of an example of the attenuation filter and the variable-phase filter each having a spot-like form.
Fig. 9 is a diagram showing the system construction in an embodiment using a spot-like beam.
Fig. 10 is a diagram showing the system construction of an embodiment of the transmission type measurement system.
Fig. 11 is a diagram showing the system construction of an embodiment of the transmission type measurement system using a spot-like beam.
Fig. 12 is a diagram showing the system construction of an embodiment in which an auxiliary system is provided for correctly measuring the position of the movable reflector of the variable-phase filter.

### EXPLANATION OF NUMERALS

- s ...: Target Object (Phase Object)
s1 ... Reference Level
s2 ... Projection
s3 ... Recess

- 11, 31, 40, 41, 81 ...: Light Source
- 12, 42 ...: Ring-Shaped Illumination Slit
- 13, 15, 21, 43, 44 ...: Lens
- 14, 18, 82, 83: ... Half Mirror
- 19, 39 ...: Attenuation Filter
- 20, 40 ...: Variable-Phase Filter
201 ... Substrate
202 ... Movable Ring
203 ... Driving Mechanism

- 22, 85 ...: Photo-Receiver
- 23 ...: Controller
- 84 ...: Reflector (Fixed Mirror)

### BEST MODES FOR CARRYING OUT THE INVENTION

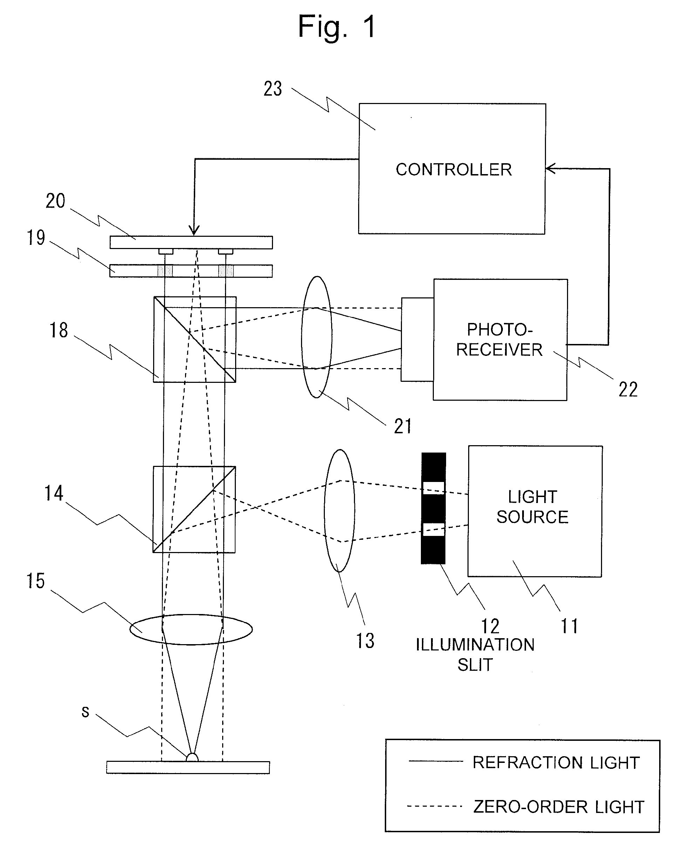

Fig. 1 shows the general construction of an embodiment of the three-dimensional geometric measurement system according to the present invention. The light emitted from the white light source 11 passes through the ring-shaped illumination slit 12 to form a ring of illumination light, called the "annular illumination light." The annular illumination light passes through the lens 13 and is reflected by the half mirror 14 to the downward direction in the drawing. The reflected light is converged by the lens 15 onto the target object (phase object) **s**.

When the light cast onto the target object **s** is reflected by its surface, the phase of the light changes according to the geometry of the object **s** (i.e. the height of the object in the light-casting direction). With the phase thus changed, the reflected light passes through the lens 15 again, and then through the half mirror 14, to reach the half mirror 18 located above. The half mirror 18 splits the reflected light into two optical paths: one extending upwards through the attenuation filter 19 and the other reaching the variable-phase filter 20.

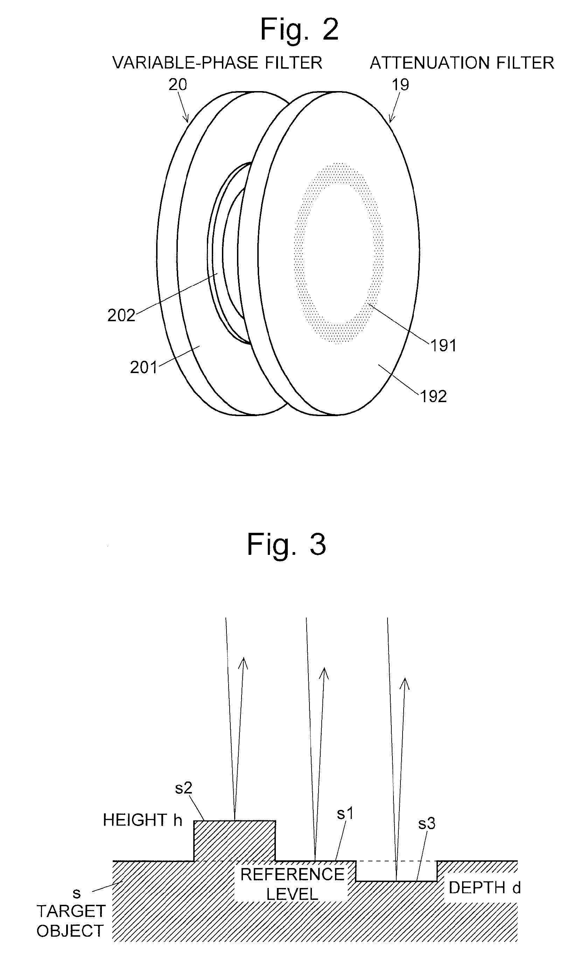

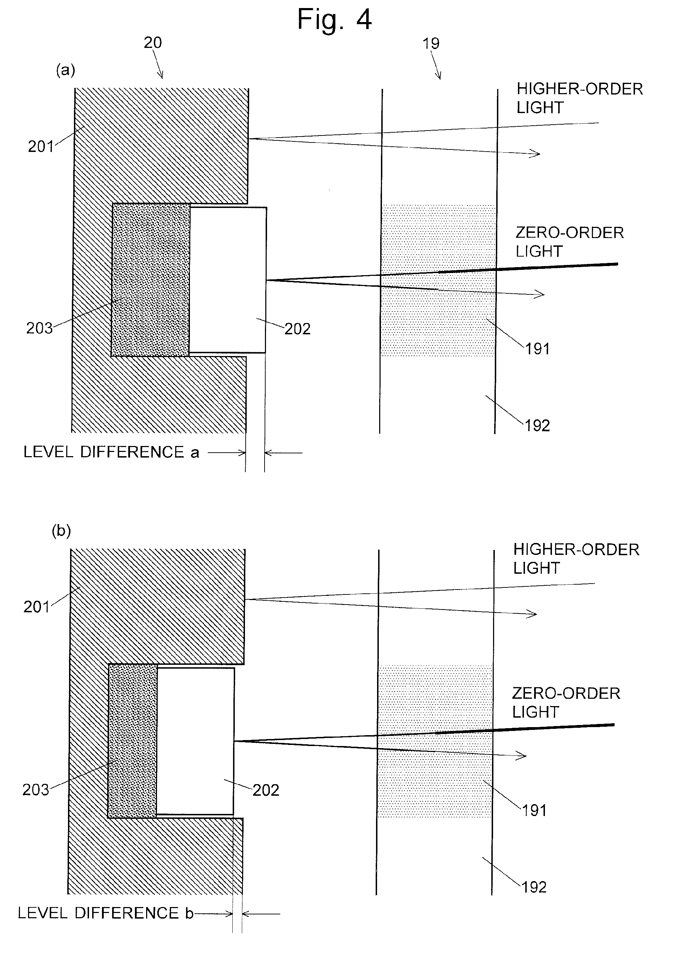

Figs. 2 and 4 illustrate the variable-phase filter 20. This variable-phase filter 20 consists of a substrate 201 having a reflective flat surface, into which a movable ring 202 having a reflective flat surface is embedded. In detail, as shown in Fig. 4, the movable ring 202 can be vertically moved in the direction perpendicular to the surface of the substrate 201 by a driving mechanism 203 embedded in the ring-shaped groove formed on the substrate 201. The stroke (i.e. the amount of the vertical motion) of the movable ring is determined so that it fully covers the height of the target object **s** (i.e. the size of a projection or recess measured in the direction of the optical axis), according to the purpose of the measurement. The driving mechanism 203, which can be constructed using a piezoelectric element, is controlled by a controller 23 (Fig. 1), which controls the entire system and processes various data.

The size (diameter) of the movable ring 202, which corresponds to that of the ring-shaped illumination slit 12, is determined so that the zero-order light of the annular illumination light exactly falls onto the movable ring 202 when the annular illumination light reflected by the target object **s** reaches the variable-phase filter 20 after passing through the aforementioned optical elements. The first or higher-order diffraction light contained in the reflection light of the annular illumination light cast onto the target object **s** illuminates the surface of the substrate 201 of the variable-phase filter 20.

The attenuation filter 19 is located immediately before the variable-phase filter 20. It has a low optical transmittance at the attenuating zone 191, which corresponds to the movable ring 202 of the variable-phase filter 20, and the highest possible optical transmittance at the other (transparent) zone 192 corresponding to the substrate 201. This construction balances the amount of the higher-order refraction light and that of the zero-order light in the case where the former amount is much smaller than the latter. Without the attenuation filter 19, the zero-order light would create too much power on the photo-receiver 22 so that a change in the high-order refraction light might not be sufficiently reflected in the resultant image.

After passing through the attenuation filter 19, the reflection light is reflected by the surface of the variable-phase filter 20 and passes through the attenuation filter 19 again in the returning path. Subsequently, the light is reflected by the half mirror 18 and converged by the lens 21 onto the photo-receiver 22.

The following section describes the optical operation of the present embodiment having the above-described construction. For the convenience of explanation, it is hereby assumed that the surface of the target object **s** consists of the following three levels shown in Fig. 3: the reference level s1; a projection s2, the top of which is higher than the reference level by *h*; and a recess s3, the bottom of which is lower than the reference level by *d.* When the annular illumination light cast on the target object **s** is reflected at these levels, the optical path of the light reflect by the projection s2 is shorter than that of the light reflected by the reference level s1 by a length of 2*h*. In contrast, the optical path of the light reflect by the recess s3 is longer than that of the light reflected by the reference level s1 by a length of 2*d.*

As explained earlier, among the components of the light reflected by the target object **s**, the zero-order light reaches the movable ring 202 of the variable-phase filter 20 while the higher-order diffraction light reaches the surface of the substrate 201 of the variable-phase filter 20. If, as shown in Fig. 4(a), the surface of the movable ring 202 is sticking out from the surface of the substrate 201 by a length of *a,* the optical path of the zero-order light reflected by the surface of the movable ring 202 will be shorter than that of the higher-order diffraction light reflected by the surface of the substrate 201 by a length of 2*a*.

Among the components of the light reflected by the target object **s**, the zero-order light and the higher-order diffraction light are reflected by the surface of the movable ring 202 and that of the substrate 201, respectively. Then, the two rays of light interfere with each other to form an image at the photo-receiver 22. Since the illumination light used in the present invention is low-coherent white light (multiple-wavelength light), the two rays of light will be in phase and strengthen the interference light when the two optical paths are identical in length. In contrast, when the two optical paths have different lengths, the two rays of light will be out of phase in most cases, so that the strength will decrease. Accordingly, when the movable ring 202 is gradually moved, the interference light measured at the photo-receiver 22 will change its strength as illustrated by the interferogram in Fig. 5(a), in which the strength peaks only in the case where the two optical paths are perfectly identical in length while taking smaller values in the other cases.

Similarly, among the components of the light reflected by the projection s2 of the target object **s**, the zero-order light and the higher-order diffraction light are reflected by the surface of the movable ring 202 and that of the substrate 201, respectively, and the two rays of light interfere with each other to form an image at the photo-receiver 22. When the movable ring 202 is moved as in the previous case, the strength of the received light will change as shown in Fig. 5(b). The peak positions (i.e. the positions of the movable ring 202 indicating the peaks) of the two interferograms differ from each other by a difference in height between the reference level s1 and the projection s2. The same analysis applies also to the interferogram of the recess s3 (Fig. 5(c)).

If the photo-receiver 22 includes a charge-coupled device (CCD) camera or similar device capable of acquiring two-dimensional data, and the controller 23 can measure the height (or depth) of each point of the phase object **s** by detecting the strength of the light received at each point of the image of the phase object **s** formed on the photo-receiver 22 while moving the movable ring 202 of the variable-phase filter 20. Thus, the three-dimensional geometry of the phase object **s** is determined.

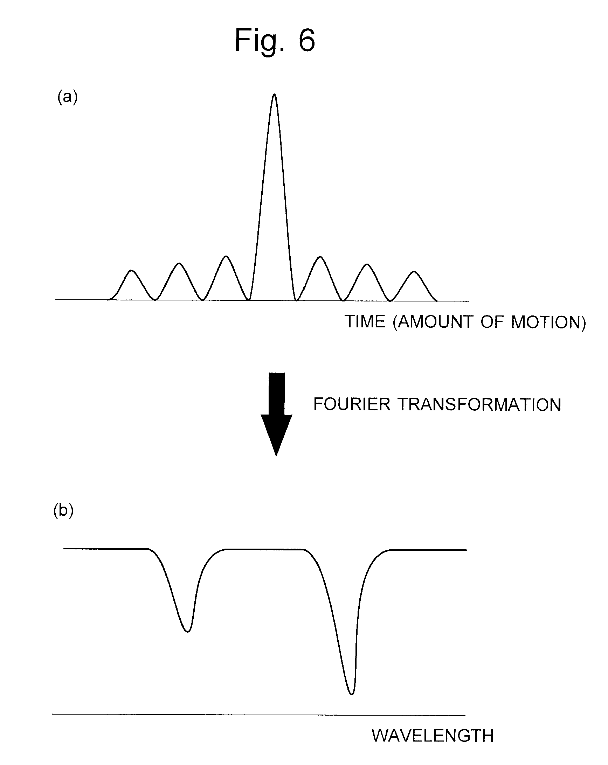

The controller 23 can also Fourier-transform the interferogram of each point to create a spectrum as shown in Fig. 6. When the white light from the light source 11 is reflected by the surface of the target object, or when it passes through the object, the light will be absorbed at one or more wavelengths (characteristic wavelengths) specific to the substance of the object. Decomposing the white light measured at the photo-receiver 22 into a spectrum as shown in Fig. 6 will reveal the absorption of light at the characteristic wavelengths. Identifying these absorption wavelengths by referencing an absorption wavelength database of various known substances will enable the analysis of the target object **s** at the measurement point.

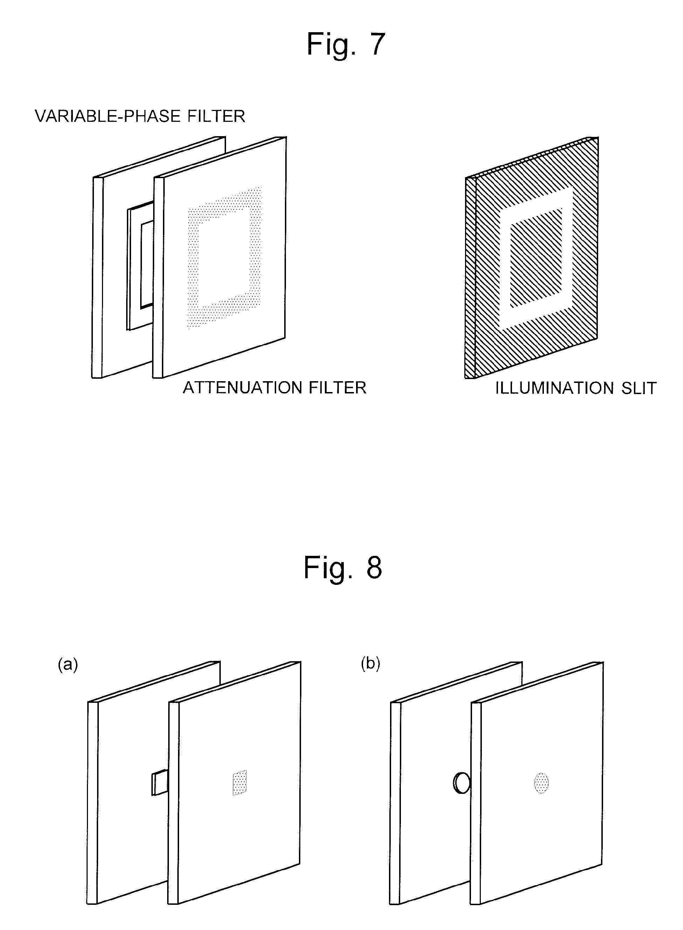

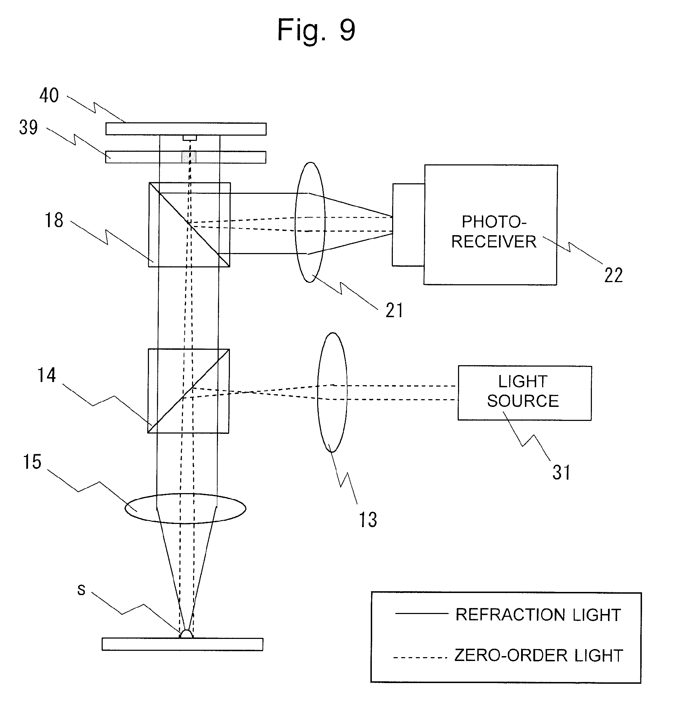

The ring-shaped illumination slit 22, the attenuation filter 19 and the movable ring 202 of the variable-phase filter 20 must have the same form. However, their specific form does not need to be circular as in the previous case. For example, it may be like a rectangular frame, as shown in Fig. 7. Moreover, the form does not need to be like a closed loop; it may be like a central spot, as shown in Fig. 8(a) or 8(b). In the case of using a laser beam or similar light source whose spot diameter is very small, it is difficult to produce an annular illumination light. In such a case, an attenuation filter and a variable-phase filter having a spot-like form as shown in Fig. 8(a) or 8(b) should be used. This construction makes the illumination slit dispensable because, as shown in Fig. 9, the light source 31 itself produces a spot-like beam. It should be noted that the depiction of relay lenses is omitted in Fig. 9.

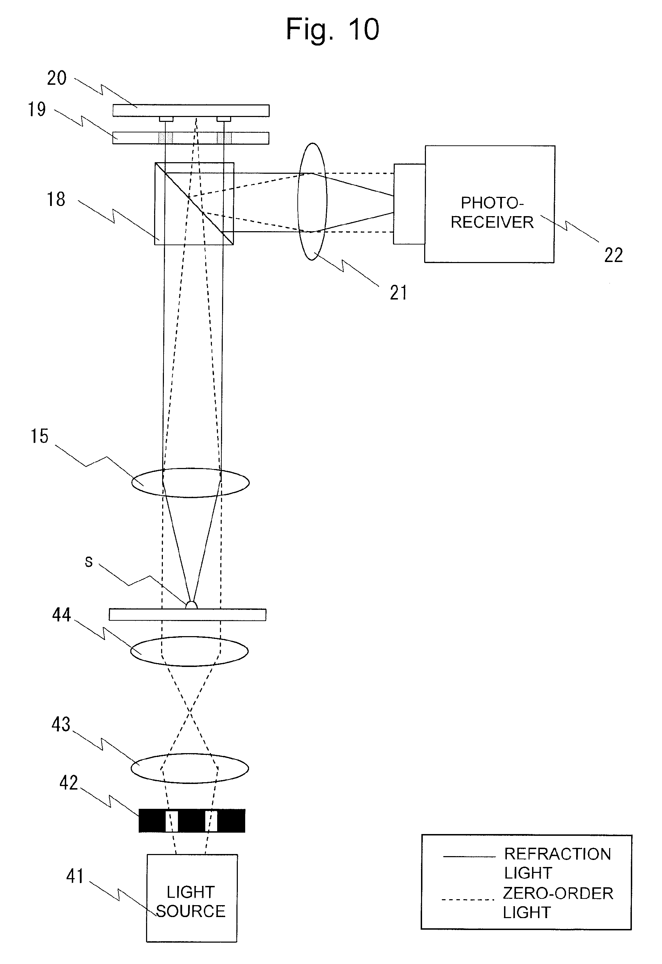

In the above-described embodiments, the three-dimensional geometric measurement system determines the three-dimensional geometry of the target object by casting light onto the object and detecting the reflection light. In addition, the present invention may be embodied as a transmission type system in which a ray of light passing through the phase object (target object) is detected in a similar way. In this case, the three-dimensional inner structure of the phase object can be measured as well as its three-dimensional outer geometry. That is, if the light used (visible, infrared or ultraviolet) is scattered at a point inside the object due to a change in physical property, both zero-order light and higher-order diffraction light will be emitted from the point. Therefore, the position of that point in the height (or depth) direction can be determined on the basis of the principle described earlier. Fig. 10 shows an example of the construction of a transmission type system. This example differs from the previous example of Fig. 1 in that the light-casting system and the transmission light analysis system are facing each other across the phase object **s**. The light-casting system needs only the light source 41, the ring-shaped illumination slit 42 and the lenses 43 and 44; there is no need to provide a half mirror 14 for separating the reflected light from the cast light. The construction of the transmission light analysis system is the same as shown in Fig. 1.

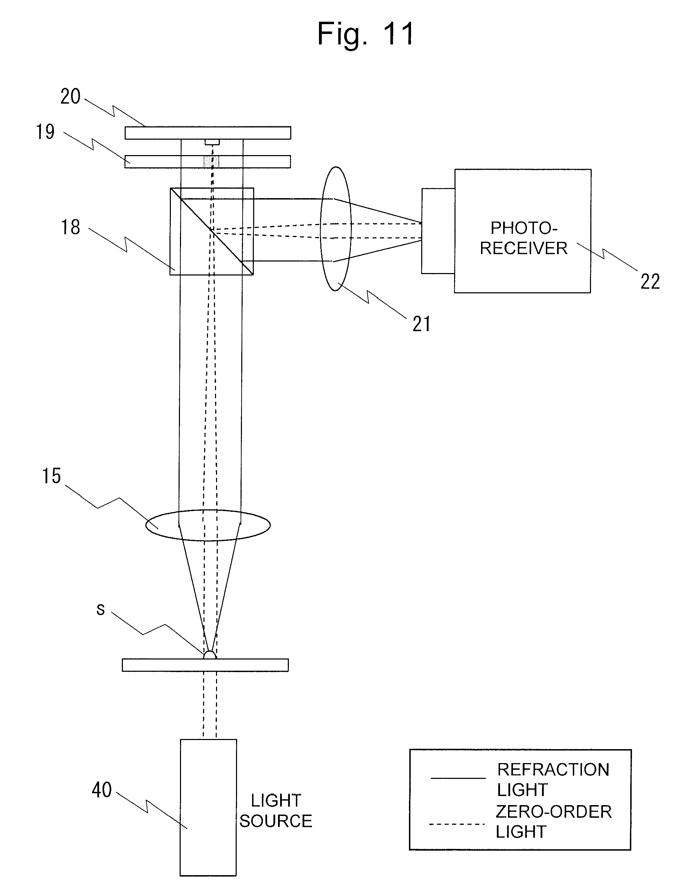

Fig. 11 shows an example of the construction of a transmission type measurement system using a spot-like beam.

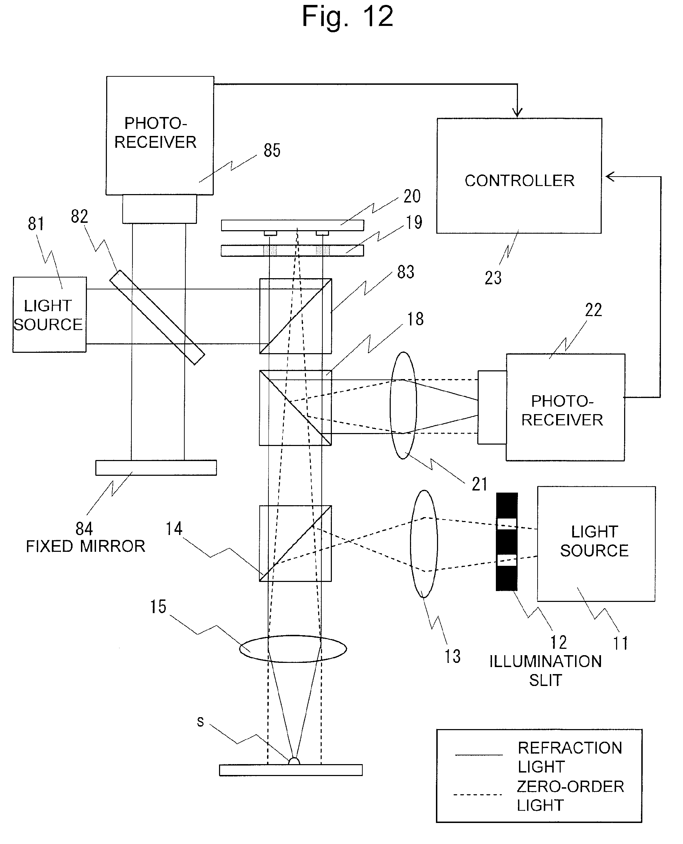

In the present invention, the measurement accuracy significantly depends on the accuracy of moving the movable element of the variable-phase. Therefore, for a high precision measurement of geometry, it is desirable to add a means for measuring the amount of motion of the movable element of the variable-phase filter. Fig. 12 shows a modified version of the three-dimensional geometric measurement system of Fig. 1, which additionally includes a means for measuring the amount of motion of the movable ring 202 of the variable-phase filter 20. The light from the white light source 81 is split by the first half mirror 82 into two rays, one passing straightly through the first half mirror 82 and the other being redirected to the reflector (fixed mirror) 84 located below in the drawing. The light that has passed through the first half mirror 82 is reflected upwards by the second half mirror 83 and reaches the variable-phase filter 20. When this light is reflected by the movable ring 202 of the variable-phase filter 20, the phase of the light changes according to the position of the movable ring. With its phase thus changed, the light is reflected by the second half mirror 83 again and reaches the first half mirror 82. Meanwhile, the other light that has been redirected downwards by the first half mirror 82 is reflected by the reflector 84 located below and returns to the first half mirror 82. Since the reflector 84 is fixed, the phase of the light traveling along this optical path never changes. Thus, the two rays of light meeting each other at the first half mirror 82 interfere with each other, where the strength of interference changes according to the position (height or depth) of the movable ring 202 of the variable-phase filter 20.

The interference light formed at the first half mirror 82 is reflected upwards and enters the photo-receiver 85. Observing the change in the strength of this interference light, the system can measure the amount of motion of the movable ring 202 of the variable-phase filter 20. This is an application of Michelson's well-known interferometer.

Alternatively, it is possible to use a piezoelectric stage having a capacitance sensor for measuring the amount of motion of the driving mechanism 203.

## Claims

1. A system for geometric measurement and analysis of a three-dimensional object, which is **characterized in that** it comprises:
a) a variable-phase filter having a fixed reflector and a movable reflector whose position can be changed along an optical axis;
b) a separating optics for guiding zero-order light to the movable reflector or the fixed reflector and higher-order diffraction light to the fixed reflector or the movable reflector, where the two kinds of light come from each point of a target object irradiated with low-coherent white light;
c) an interference optics system for guiding the reflected zero-order light and the reflected higher-order diffraction light to substantially a same point;
d) a photo-receiver for measuring a strength of the interference light; and
e) a position-determining and analyzing unit for determining a position of each point of the target object in a direction of the optical axis and/or for determining a composition of each point of the target object, on the basis of a change in the strength of the interference light measured by the photo-receiver, while moving the movable reflector along the optical axis.

2. The system for geometric measurement and analysis of a three-dimensional object according to claim 1, which is **characterized in that** an attenuation filter is provided before a component of the variable-phase filter that reflects the zero-order light.

3. The system for geometric measurement and analysis of a three-dimensional object according to claim 1 or 2, which is **characterized in that** the light cast onto the target object has an annular form and the movable reflector of the variable-phase filter correspondingly has an annular form.

4. The system for geometric measurement and analysis of a three-dimensional object according to claim 1 or 2, which is **characterized in that** the light cast onto the target object has a spot-like form and the movable reflector of the variable-phase filter correspondingly has a spot-like form.

5. The system for geometric measurement and analysis of a three-dimensional object according to one of claims 1-4, which is **characterized in that** the movable reflector of the variable-phase filter uses a piezoelectric element.

6. The system for geometric measurement and analysis of a three-dimensional object according to one of claims 1-5, which is **characterized in that** it further comprises a means for measuring an amount of motion of the movable reflector.

7. The system for geometric measurement and analysis of a three-dimensional object according to claim 6, which is **characterized in that** the means for measuring the amount of motion of the movable reflector of the variable-phase filter employs interference of two rays of split light.

8. The system for geometric measurement and analysis of a three-dimensional object according to claim 6, which is **characterized in that** the means for measuring the amount of motion of the movable reflector uses a capacitance sensor.

9. The system for geometric measurement and analysis of a three-dimensional object according to one of claims 1-8, which is **characterized in that** a light source and the separating optics are located on the same side of the target object.

10. The system for geometric measurement and analysis of a three-dimensional object according to one of claims 1-8, which is **characterized in that** a light source is located in opposition to the separating optics across the target object.
